## Europäisches Patentamt
(19) **European Patent Office**
**Office européen des brevets**

(11) Numéro de publication: **0 123 619**
**B1**

(12) **FASCICULE DE BREVET EUROPEEN**

(45) Date de publication du fascicule du brevet:
10.12.86

(51) Int. Cl.⁴: **B 62 D 5/08**

(21) Numéro de dépôt: **84400776.5**

(22) Date de dépôt: **18.04.84**

(54) **Distributeur hydraulique rotatif, notamment pour système de direction assistée de véhicule.**

(30) Priorité: **26.04.83 ES 522189**

(43) Date de publication de la demande:
**31.10.84 Bulletin 84/44**

(45) Mention de la délivrance du brevet:
**10.12.86 Bulletin 86/50**

(84) Etats contractants désignés:
**DE FR GB IT**

(56) Documents cités:
**EP - A - 0 021 970**
**EP - A - 0 067 572**
**EP - A - 0 077 710**
**EP - A - 0 084 487**
**DE - B - 1 014 444**
**FR - A - 1 598 825**
**FR - A - 2 365 472**
**FR - A - 2 370 617**

(73) Titulaire: **BENDIX ESPANA S.A., Balmes 243,**
**Barcelona 6 (ES)**

(72) Inventeur: **Simon Bacardit, Juan, Calle**
**Mallorca 451 6o 4aA, Barcelone 13 (ES)**

(74) Mandataire: **Le Moenner, Gabriel et ai, SERVICE**
**BREVETS BENDIX 44, Rue François 1er, F-75008 Paris**
**(FR)**

ACTORUM AG

## Description

La présente invention concerne les distributeurs hydrauliques rotatifs, plus particulièrement pour système de direction assistée de véhicule, du type comprenant un élément rotatif primaire, destiné à être relié à un dispositif d'actionnement (typiquement un volant du véhicule), un élément rotatif secondaire, coaxial à l'élément rotatif primaire et destiné à être relié à un mécanisme entraîné (typiquement un mécanisme d'orientation de roues directionnelles), un moyen de valve couplé à l'élément primaire et destiné à commander un moteur hydraulique d'assistance du mécanisme entraîné en fonction d'un déplacement angulaire relatif limité entre les éléments primaire et secondaire, une partie de l'élément secondaire entourant au moins partiellement une partie de l'élément primaire, et au moins un dispositif élastique déformable de configuration générale annulaire sensiblement fermée entourant au moins l'élément primaire au niveau de la dite partie de ce dernier entourée par l'élément secondaire et présentant au moins une paire de surfaces de butée coopérant avec des premier et second éléments de liaison reliés respectivement aux éléments primaire et secondaire pour maintenir ceux-ci en position relative centrée de repos.

Un distributeur hydraulique de ce type fait l'objet du document EP-A-0 077 710 publié le 27-04-83 au nom de la demanderesse (état de la technique selon Art. 54 (3) CBE) et qui décrit l'utilisation, comme dispositif élastique, d'au moins un ressort en forme de C assurant un centrage efficace en position de repos des éléments primaire et secondaire, en autorisant un accouplement élastique à course morte entre ces éléments et fournissant de plus sur l'élément primaire une réaction élastique souhaitable, notamment pour fournir une «sensation» tactile lors de l'actionnement de cet élément primaire.

Toutefois, dans le système de ce document, la précontrainte et, partant, la réaction fournie par le ressort en C est déterminée une fois pour toutes par dimensionnement du ressort et/ou des éléments de liaison associés.

Or, il s'avère fréquemment souhaitable de pouvoir moduler une telle réaction, notamment, pour les systèmes de direction assistée, en fonction de conditions de roulage du véhicule, en ligne droite, en courbes ou lors de manœuvres de parking.

Il est connu de réaliser de telles modulations de la réaction par des moyens hydrauliques. Le document DE-B-1 014 444 décrit ainsi, en place et lieu de ressorts hélicoïdaux de réaction, l'utilisation de deux pistons montés en opposition dans le stator de moyen de valve et étant mis en œuvre pour créer sur l'arbre d'entrée un couple antagoniste en étant connectés aux circuits d'alimentation du moteur d'assistance, suivant un agencement délicat, difficile à équilibrer et non modulable. Les demandes de brevet européen EP-A-0 021 970 et EP-A-0 084 487 au nom de la demanderesse, décrivent par ailleurs l'utilisation de pressions de réaction asservies s'exerçant, pour créer des couples antagonistes sur l'élément primaire ou d'entrée du distributeur, sur des portions du rotor du moyen de valve, en l'occurence du type dit «en étoile», dans des agencements particulièrement souples et polyvalents mais de fabrication assez délicate.

La présente invention a pour objet de proposer un distributeur hydraulique du type défini en premier, de conception particulièrement simple, de fabrication et de montage aisés, de configuration ramassée, permettant, avec un nombre de composants extrêmement réduit, d'assurer simultanément un centrage élastique, une réaction également élastique mais modulable par des moyens internes ou externes, ainsi que, pour un mécanisme de direction assistée, la détermination — également modulable — d'un point central (ou réaction initiale) hydraulique.

Pour ce faire, selon une caractéristique de l'invention, le dispositif élastique est monté à coulissement étanche par ses faces latérales annulaires opposées dans une cavité annulaire formée dans une pièce unie en rotation à l'élément secondaire, concentriquement à ce dernier, et est conformé pour définir dans cette cavité une chambre interne et une chambre externe séparées et de volumes inversement variables, et en ce qu'il comprend des moyens pour acheminer un fluide sous pression modulable dans au moins une de ces chambres.

Dans un tel agencement, outre les fonctions élastiques intrinsèques du dispositif élastique, l'application d'une pression déterminée dans la chambre interne ou dans la chambre externe, selon que l'on veut tendre à «ouvrir» ou «fermer» le dispositif élastique annulaire, permet de moduler la réaction exercée par ce dernier. Il est ainsi possible, conformément aux objets de l'invention, de réaliser une précontrainte modulable du point central du distributeur sans nécessiter de déplacement du moyen de valve et, en asservissant la pression de pilotage à des conditions d'utilisation du distributeur, de moduler en outre, indépendamment, la ou les portions en pente de la caractéristique pression d'assistance fournie/couple d'entrée du distributeur, cet agencement offrant ainsi une grande versatilité et une souplesse d'utilisation remarquable.

D'autres caractéristiques et avantages de la présente invention ressortiront de la description suivante de modes de réalisation donnés à titre illustratif mais nullement limitatif, faite en relation avec les dessins annexés, sur lesquels:

— la figure 1 est une vue schématique en coupe longitudinale d'un premier mode de réalisation d'un dispositif élastique de réaction et de centrage pour distributeur hydraulique selon l'invention;

— la figure 2 est une vue en coupe transversale suivant le plan de coupe II-II de la figure 1;

— les figures 3, 4 et 5 sont des vues schématiques en coupe transversale similaires à la figure 2 montrant des second, troisième et quatrième modes de réalisation du dispositif de réaction et de centrage;

— la figure 6 est une vue schématique en coupe longitudinale partielle d'un distributeur hydraulique selon l'invention;

— la figure 7 est une vue en coupe transversale suivant le plan de coupe VII-VII de la figure 6 montrant un cinquième mode de réalisation du dispositif élastique de réaction et de centrage selon l'invention;

— la figure 8 est une vue similaire aux figures 3-5 et 7 montrant un sixième mode de réalisation du dispositif élastique de réaction et de centrage selon l'invention;

— la figure 9 est une vue partielle similaire à la figure 8 montrant une variante de réalisation du dispositif élastique de réaction et de centrage de cette figure 8;

— les figures 10 et 11 sont des vues similaires aux figures 1 et 2 montrant un huitième mode de réalisation du dispositif élastique de réaction et de centrage selon l'invention;

— les figures 12 et 13 sont des vues similaires aux figures 10 et 11 et montrant un neuvième mode de réalisation du dispositif élastique de réaction de ce centrage selon l'invention;

— les figures 14 à 19 sont des diagrammes fonctionnels d'un distributeur hydraulique selon l'invention montrant diverses variantes d'obtention de la pression de modulation du dispositif élastique de réaction et de centrage selon l'invention; et

— la figure 20 représente la courbe caractéristique pression d'assistance/couple d'entrée d'un distributeur hydraulique pour système de direction assistée de véhicule selon l'invention.

Dans la description qui va suivre et/sur les dessins, les éléments identiques ou analogues portent les mêmes chiffres de référence, éventuellement indicés.

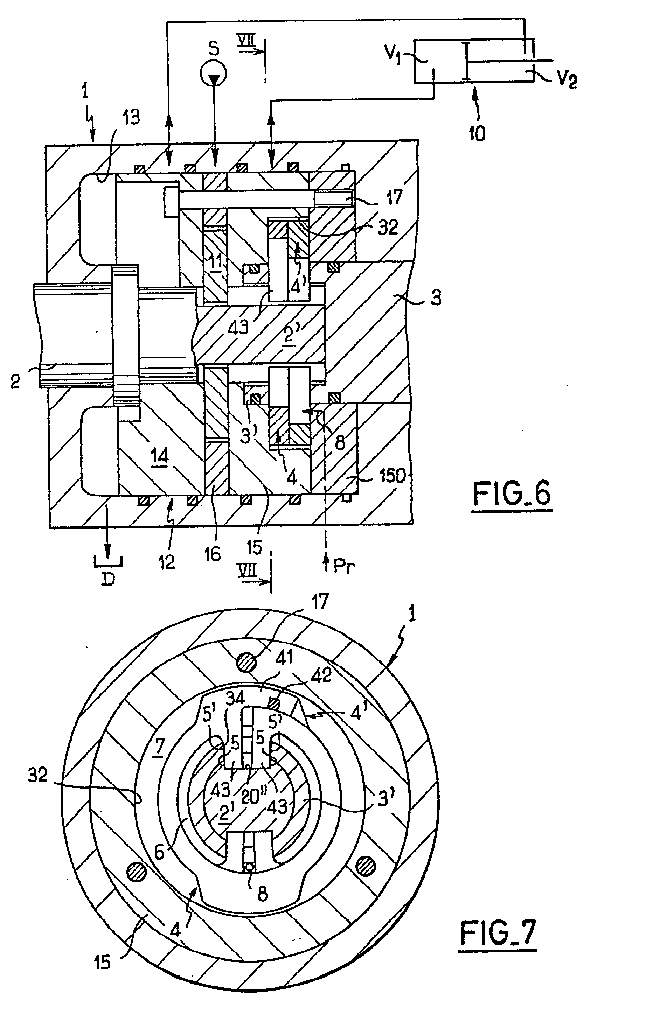

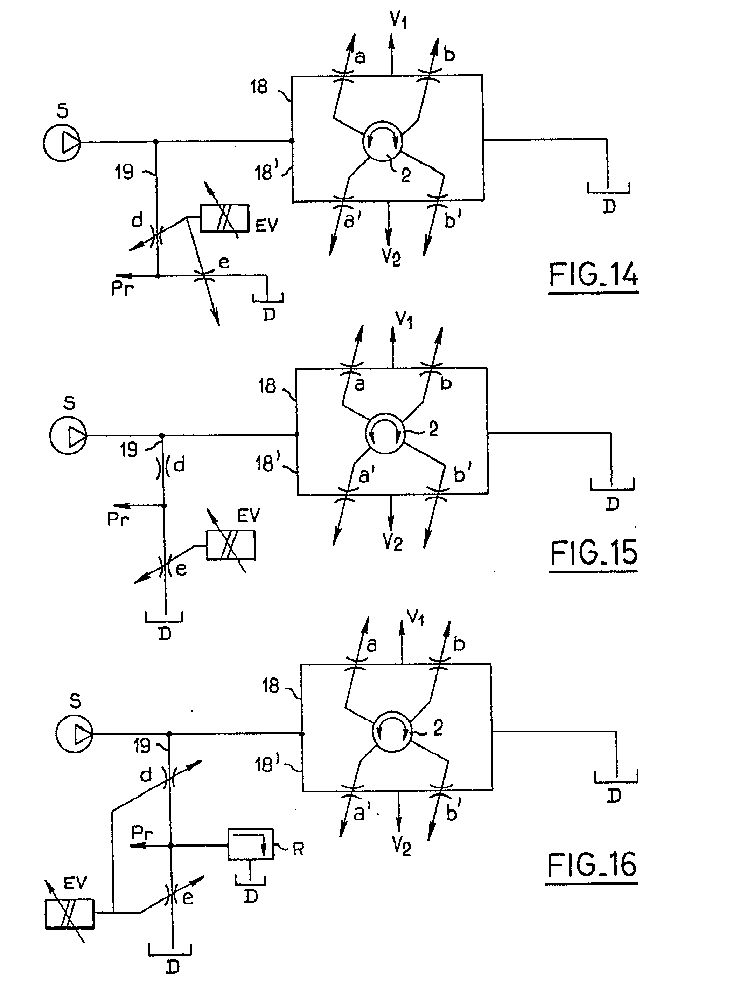

On se référera tout d'abord à la figure 6 qui représente schématiquement un distributeur hydraulique rotatif pour système de direction assistée de véhicule. Le distributeur comprend, dans un boîtier de direction 1, un élément rotatif primaire 2 destiné à être relié à un dispositif d'actionnement — en l'espèce un volant de véhicule — et un élément rotatif secondaire 3, coaxial à l'élément primaire 2, s'étendant dans le prolongement de celui-ci et destiné à être relié à un mécanisme entraîné — typiquement un mécanisme d'orientation de roues directionnelles — l'élément secondaire 3 se prolongeant pour constituer par exemple un pignon engrenant avec une crémaillère d'un mécanisme de direction. Cette crémaillère (non représentée) est couplée opérativement à un dispositif d'assistance 10 constitué par un vérin double effet comportant deux chambres antagonistes $V_1$ et $V_2$. Le vérin d'assistance 10 est commandé par un moyen de valves de distribution constitué, dans l'exemple représenté, d'un rotor en étoile 11 reçu à coulissement en rotation étanche dans une cavité discoïde complémentaire d'un stator 12 logé dans une cavité intérieure 13 du boîtier 1 et constitué par un assemblage coaxial de deux pièces d'extrémité annulaires 14 et 15 et d'une pièce intermédiaire annulaire 16 entourant le rotor 11, ces pièces étant assemblées par des boulons 17 parallèles à l'axe commun des éléments primaire 2 et secondaire 3. Le rotor en étoile 11 est uni en rotation avec une partie d'extrémité 2' de l'élément primaire d'entrée 2. Un tel moyen de valve de distribution à rotor en étoile est décrit notamment dans les documents EP-A-0 021 970 au nom de la demanderesse, dont le contenu est supposé intégré ici pour référence, et EP-A-0 084 487 (publié le 27.07.83). Comme il est connu de ces documents, le rotor 11 et le stator 12 définissent mutuellement une paire de circuits parallèles 18 et 18' entre une source de fluide sous pression S et une décharge D, chaque circuit 18 ou 18' comprenant au moins deux étranglements variables en série a, b, ou a', b' mis en œuvre lors du déplacement relatif du rotor 11 par rapport au stator 12 pour piloter la pression dans les chambres $V_1$ ou $V_2$ du vérin d'assistance 10 (comme représenté schématiquement sur les figures 14 à 19).

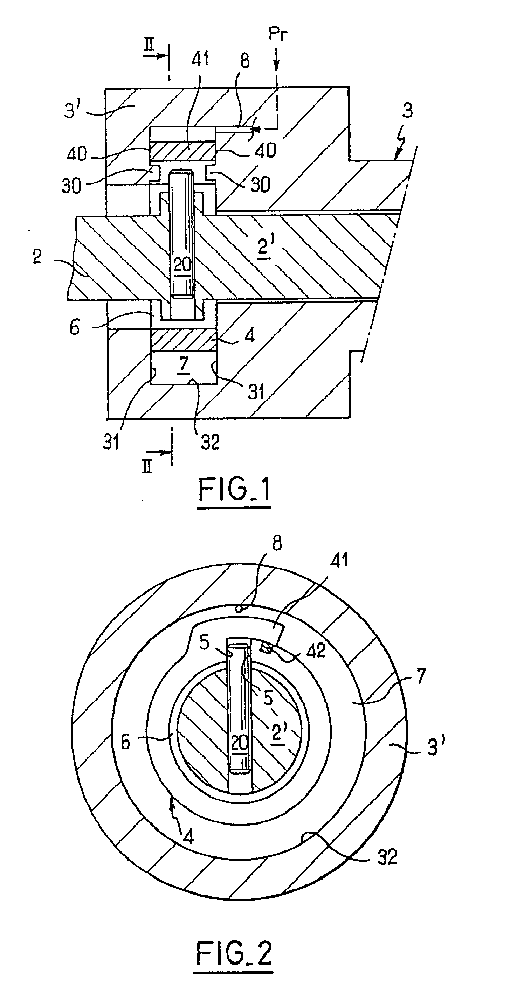

En faisant à présent référence aux figures 1 et 2, la présente invention concerne un dispositif élastique, désigné généralement par la référence 4, coopérant avec les éléments primaire 2 et secondaire 3 pour assurer un centrage efficace en position de repos de ces éléments primaire et secondaire (et donc du rotor 11 vis-à-vis du stator 12) en autorisant un accouplement élastique à course morte entre ces éléments primaire et secondaire tout en fournissant sur l'élément primaire 2 une réaction élastique pour, dans le cas d'une direction assistée, fournir au conducteur une «sensation» tactile lors de l'actionnement du distributeur. Conformément à l'invention une partie 3' de l'élément secondaire 3 entoure au moins partiellement une partie 2' de l'élément primaire 2, le dispositif élastique déformable 4 entourant au moins ladite partie 2' de l'élément primaire.

Dans le mode de réalisation des figures 1 et 2, le dispositif élastique 4 présente une forme générale annulaire en C, les extrémités en regard 5 des branches du C formant une paire de surfaces de butée coopérant, d'une part avec les bords transversalement opposés d'un pion 20 emmanché diamétralement dans la partie 2' de l'élément primaire 2, et d'autre part avec deux saillies 30 s'étendant axialement l'une vers l'autre à partir des parois axialement en regard 31 d'une chambre annulaire 32 formée dans la partie 3' de l'élément secondaire 3 et dans laquelle est disposé le dispositif élastique 4.

Conformément à un aspect de l'invention, le dispositif élastique 4 est monté à coulissement étanche par ses faces latérales annulaires opposées 40 contre les faces planes, dressées, paralèlles 31 de la cavité 32. Dans le mode de réalisation de la figure 1, l'une des extrémités des branches du dispositif élastique 4 comporte une partie de prolongement 41 décalée radialement vers l'extérieur pour venir recouvrir à coulissement étanche la périphérie de l'autre extrémité du dispositif 4, l'étanchéité étant assurée par un joint 42 porté par l'une ou l'autre de ces parties d'extrémité en recouvrement. De cette façon, le dispositif élastique 4 délimite dans la cavité 32 une chambre interne 6 et une chambre externe 7 séparées l'une de l'autre et de volumes inversement variables lorsque le dispositif élastique 4 subit une déformation tendant à rapprocher ou écarter les faces en regard 5.

Conformément à l'invention, un fluide sous pression modulable $P_r$ peut être admis, dans l'exemple représenté, dans la chambre externe 7 via un passage 8 ménagé dans la partie 3' de l'élément secondaire 3. Il est ainsi possible, en fonction de la pression $P_r$ admise dans la chambre 7, de modifier la caractéristique élastique du dispositif 4 autrement déterminée une fois pour toute par ses dimensionnements, et donc de moduler la réaction fournie par ce dispositif élastique 4 notamment en fonction de paramètres liés aux conditions de roulage du véhicule, la pression $P_r$ étant elle-même modulée en fonction de ces paramètres, comme on le verra plus loin.

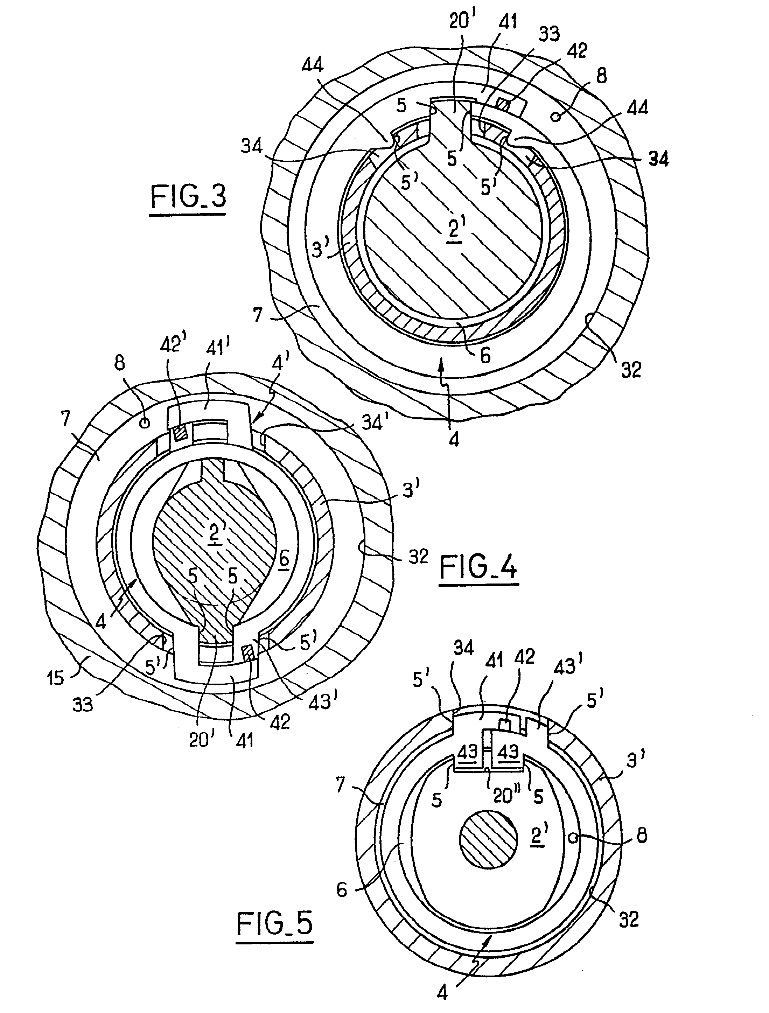

Le mode de réalisation représenté sur la figure 3 est similaire à celui des figures 1 et 2 si ce n'est que le dispositif élastique 4 est disposé autour de la partie 3' de l'élément secondaire 3 se présentant sous la forme d'une extension tubulaire pourvue d'une première lumière 33 et, symétriquement de part et d'autre de cette dernière, de deux lumières 34. La cavité 32 abritant le dispositif élastique 4 est formée par une pièce susceptible de se déplacer en rotation avec l'élément secondaire 3, 3' et constituée par exemple par une pièce d'extrémité 15 du stator 12 du moyen de valve de distribution décrit précédemment en relation avec la figure 6. Dans ce mode de réalisation de la figure 3, les faces en regard 5 des extrémités du dispositif élastique 4 coopèrent avec une saillie radiale 20' formée d'une seule pièce avec la partie 2' de l'élément primaire et s'étendant librement, au repos, dans la première lumière 33 de la partie 3'. Le dispositif élastique 4 coopère avec cette partie 3' au moyen de projections 44 faisant saillie radialement vers l'intérieur et définissant des faces d'appui 5' coopérant avec les bords dirigés vers la première lumière 33 des lumières 34 dans lesquelles les projections 44 sont reçues.

Le mode de réalisation représenté sur la figure 4 est également, dans ses grandes lignes, similaire à ceux décrits en relation avec les figures 2 et 3 si ce n'est que la partie d'extrémité 41 coopère à recouvrement avec un prolongement formant patte s'étendant vers l'extérieur 43' de l'autre extrémité du dispositif élastique 4. La projection radiale 20' de la partie 2' coopère avec les faces d'appui en regard 5 du dispositif élastique 4 dont les secondes faces d'appui 5' sont constituées par les faces opposées de la patte 43' et de son équivalent formant le raccordement avec le prolongement 41, ces éléments s'étendant librement au travers d'une lumière 33 formée dans la partie 3'. On notera, dans ce mode de réalisation de la figure 4, qu'il est prévu deux dispositifs élastiques adjacents diamétralement inversés 4 et 4', la partie 3' étant en conséquence pourvue de deux lumières 33 et 33' diamétralement opposées l'une à l'autre.

Dans le mode de réalisation de la figure 5, le dispositif élastique 4 est, comme dans la figure 4, disposé autour de la partie 2' de l'élément primaire 2 à l'intérieur de la partie 3' de l'élément secondaire 3 définissant la cavité 32. Les faces d'appui 5 du dispositif élastique 4 sont ici formées par les bords opposés de deux pattes 43 faisant saillie vers l'intérieur reçues dans une fente longitudinale 20'' de la partie 2' de l'élément primaire. Les faces d'appui 5' du dispositif élastique 4 coopérant avec les bords d'une lumière 34 de la partie 3' de l'élément secondaire 3 sont formées par une patte 43' s'étendant vers l'extérieur de l'extrémité du dispositif élastique 4 recouverte par le prolongement 41 de l'autre extrémité et la face de raccordement correspondant de ce prolongement 41. Dans ce mode de réalisation, la sollicitation exercée sur le dispositif élastique 4 par l'élément primaire 2, 2' tend à rapprocher les deux extrémités en regard du dispositif élastique 4 au lieu de les écartes comme précédemment. En conséquence, la pression de modulation $P_r$ est ici admise dans la chambre interne 6 comme l'indique le conduit d'alimentation 8 sur la figure 5.

Dans le mode de réalisation des figures 6 et 7, comme dans le mode de réalisation de la figure 3, le dispositif élastique 4 est disposé autour de la partie 3' de l'élément secondaire 3 entourant lui même immédiatement la partie d'extrémité 2' de l'élément primaire 2. La cavité 32 est formée dans la pièce d'extrémité 15 du stator 12 à laquelle est associé, également au moyen des boulons 17, un prolongement annulaire 150 définissant l'une des parois annulaires 31 de la cavité 32. Comme dans le mode de réalisation de la figure 5, les faces d'appui 5 du dispositif élastique 4 avec la partie 2' sont formées par des pattes 43 s'étendant vers l'intérieur et reçues dans une gorge longitudinale 20'' de la partie 2', ces pattes 43 s'étendant également au travers d'une lumière 34 de la partie 3' pour former les faces d'appui 5' dans le prolongement des faces d'appui 5. Ici aussi, la pression de modulation $P_r$ est introduite dans la chambre interne 6 par le passage 8. On notera, sur les figures 6 et 7, qu'il est prévu deux dispositifs élastiques adjacents diamétralement inversés 4 et 4' comme dans le mode de réalisation de la figure 4.

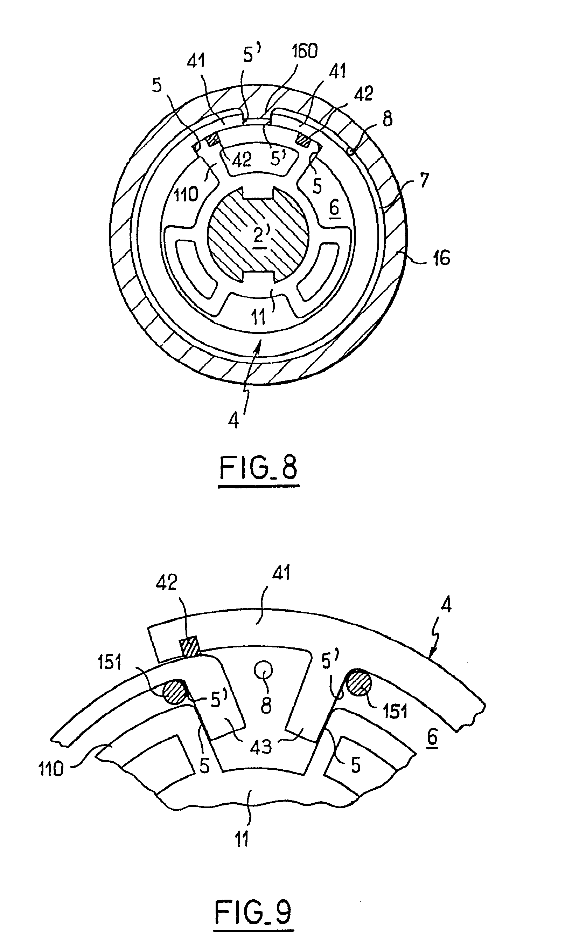

Le rotor 11 des moyens de valve de distribution étant couplé en rotation à la partie d'extrémité 2' de l'élément primaire 2, la coopération entre cette partie 2' et le dispositif élastique 4 peut s'effectuer en variante, comme représenté sur les figures 8 et 9, au moyen d'un des bras 110 s'étendant radialement vers l'extérieur du rotor 11. Ainsi, comme représenté sur la figure 8, le dispositif élastique 4 peut être disposé autour du rotor 11, à l'intérieur de la pièce intermédiaire annulaire 16 du stator, les faces d'appui 5 coopérant avec les bords extérieurs du bras 110 et les prolongements 41 coopérant en coulissement étanche avec la périphérie extérieure du bras 110 portant avantageusement les joints d'étanchéité 42. Les extrémités en regard des prolongements 41 forment les faces d'appui 5' coopérant avec les faces latérales opposées d'une projection 160 de la pièce 16 faisant saillie radialement vers l'intérieur; la pression de modulaion de réaction $P_r$ est admise, par le passage 8, dans l'espace annulaire formant la chambre 7 entre la périphérie extérieure du dispositif élastique 4 et la périphérie intérieure de la pièce 16.

En variante, comme représenté sur la figure 9, les faces d'appui 5 du dispositif élastique peuvent être formées par des pattes 43 s'étendant vers l'intérieur du dispositif élastique 4 pour coopérer respectivement avec les bords extérieurs en regard de deux bras radiaux 110 adjacents du rotor 11. Les bords des pattes 43 formant les faces d'appui 5 forment également les faces d'appui 5' coopérant avec des pions 151 solidaires du stator 12 et s'étendant axialement entre les bords périphériques externes des bras 110 et la surface intérieure du dispositif élastique 4, la pression de modulation de réaction $P_r$ étant admise, par le passage 8, dans la chambre interne 6.

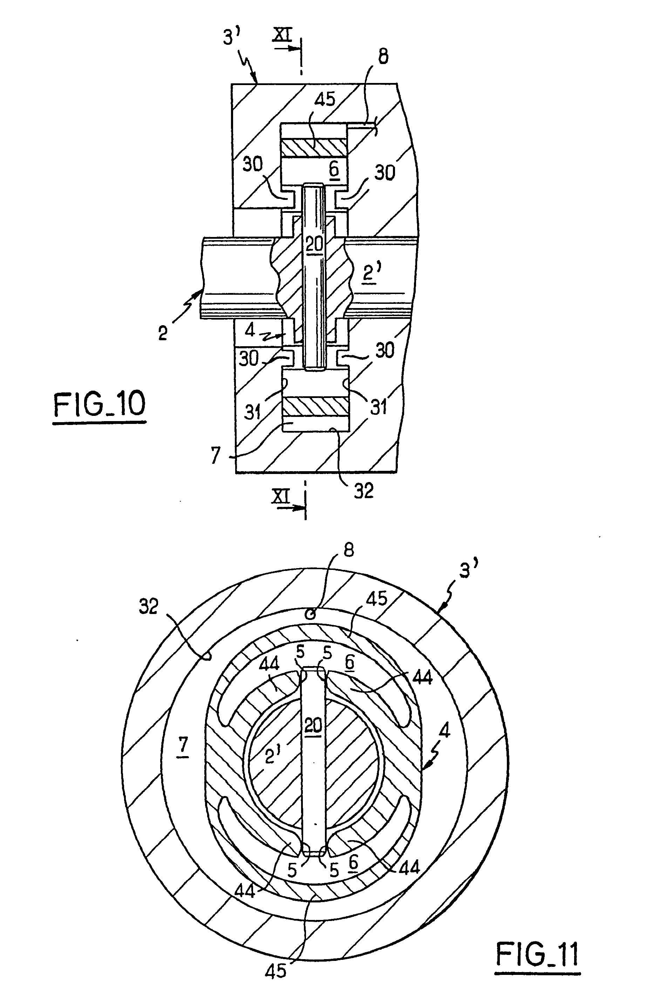

Dans le mode de réalisation représenté sur les figures 10 et 11, analogue en bien des points à celui des figures 1 et 2, le dispositif élastique 4 se présente sous la forme d'une structure annulaire fermée comportant deux paires de bras internes 44 de configuration sensiblement semi-circulaire dont les extrémités en regard forment les surfaces d'appui 5 (et 5') coopérant avec le pion 20 traversant diamétralement de part et d'autre la partie 2' et avec les projections 30 des faces 31 de la cavité 32. La cavité interne 6 est ainsi entièrement définie dans le dispositif élastique 4, essentiellement entre les bras 44 et les zones de jonction périphériques 45. Comme dans le mode de réalisation des figures 1 et 2, la pression de modulation de réaction $P_r$ est admise par le passage 8 dans la chambre externe 7 définie dans la cavité 32.

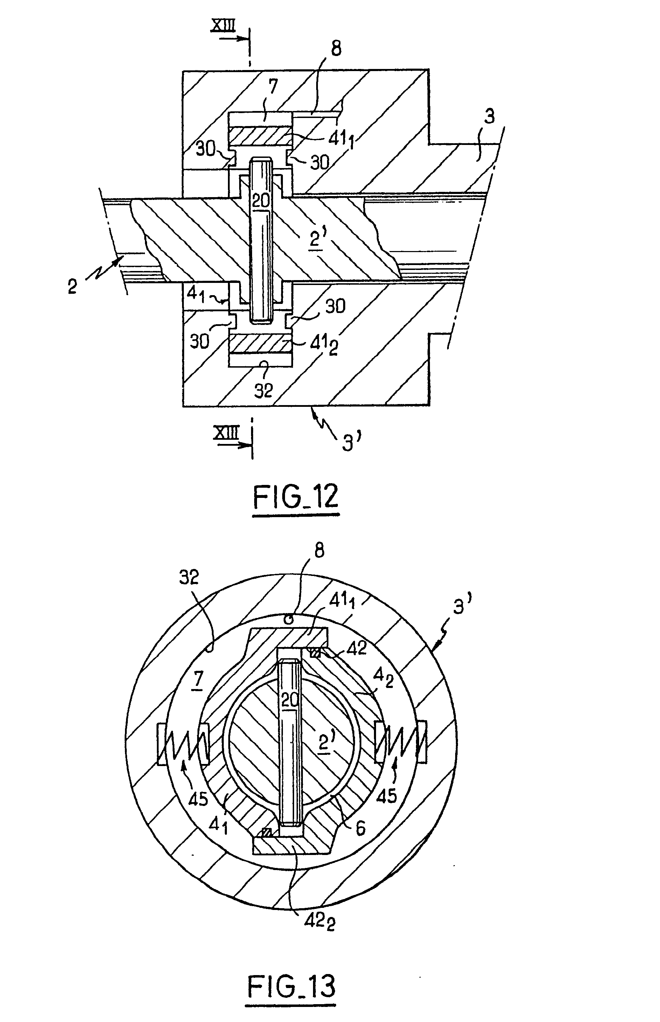

Le mode de réalisation des figures 12 et 13 est similaire à celui des figures 1 et 2 si ce n'est que le dispositif élastique est ici constitué de deux sous-ensembles symétriques $4_1$ et $4_2$, le prolongement de l'un ($41_1$ ou $42_2$) coopérant à coulissement étanche avec l'extrémité de l'autre ($4_2$ ou $4_1$). L'assemblage et le caractère élastique du dispositif constitué par les deux sous-ensembles $4_1$ et $4_2$ sont assurés par des ressorts diamétralement opposés 45 prenant chacun appui dans des logements en regard formés sur la partie centrale du sous-ensemble correspondant et dans la face périphérique interne de la pièce 3'. La pression de modulation $P_r$ est introduite, par le passage 8, dans la chambre externe 7.

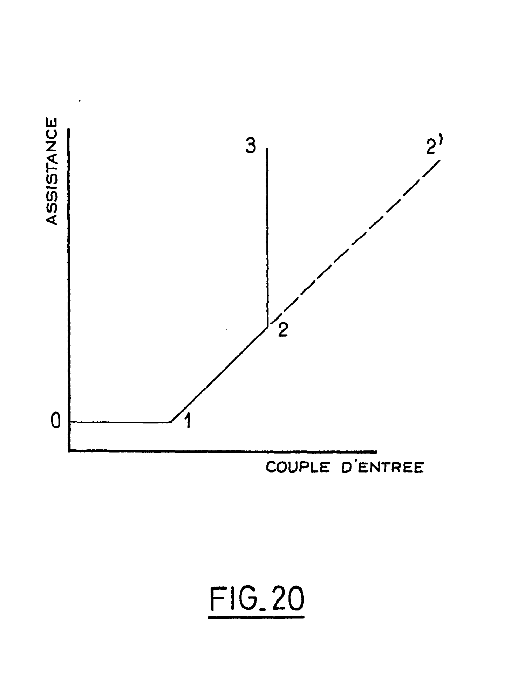

Les figures 14 à 19 illustrent divers schémas fonctionnels permettant de fournir la pression de réaction modulée $P_r$. Dans le mode de réalisation de la figure 14, la pression de réaction $P_r$ est prélevée dans une dérivation 19 entre la source S et la décharge D (en amont du distributeur), entre deux étranglements variables $\underline{d}$ et $\underline{e}$ actionnés simultanément en sens inverse par un actionneur électromagnétique EV lui-même piloté par des signaux provenant de l'ordinateur de bord du véhicule. Dans le mode de réalisation de la figure 15, l'étranglement amont $\underline{d}$ de la dérivation 19 est fixe, seul l'étranglement aval $\underline{e}$ étant modulé par l'actionneur EV. Le mode de réalisation de la figure 16 est identique à celui de la figure 14 si ce n'est qu'il est prévu, dans la dérivation 19, au niveau du piquage de la pression $P_r$, une valve de limitation de pression R à ressort taré limitant la pression de réaction (et donc le couple de réaction) à une valeur maximum déterminée, ce qui correspond à la portion 2-3 de la caractéristique de la figure 20.

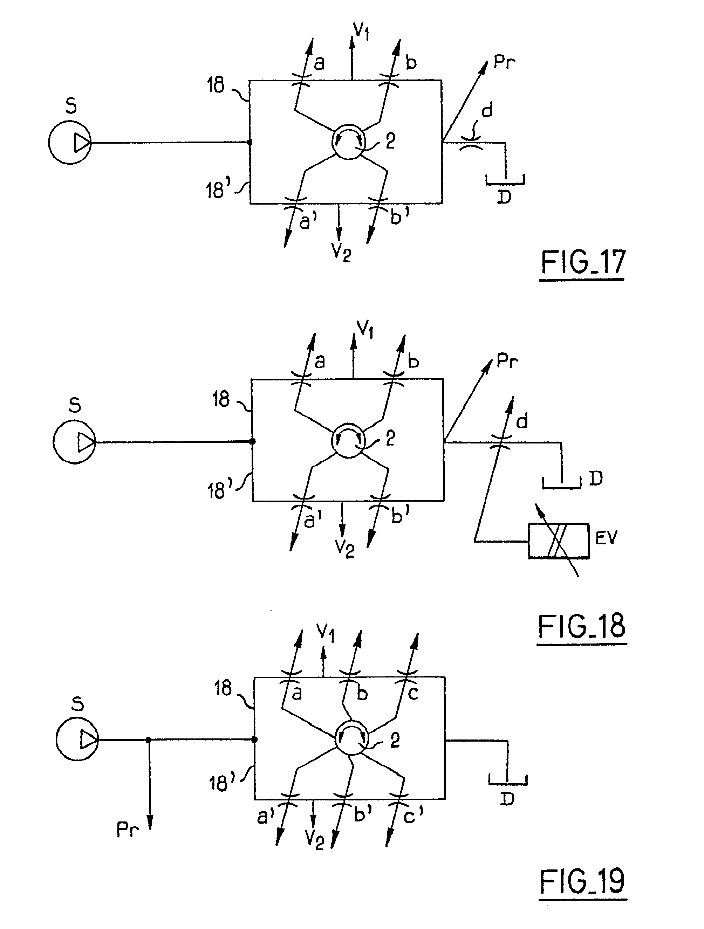

Les figures 17 à 19 représentent d'autres variantes de réalisation permettant en outre de déterminer le point central hydraulique du distributeur (c'est-à-dire la portion 0-1 de la caractéristique de la figure 20). Dans le cas de la figure 17, la pression de réaction $P_r$ est prélevée à la sortie du distributeur (en aval des circuits 18 et 18'), une restriction fixe $\underline{d}$ étant ménagée dans la ligne de retour vers la décharge D. Dans le cas de la figure 18, l'étranglement aval $\underline{d}$ peut être modulé par un actionneur électromagnétique EV comme dans le mode de réalisation de la figure 15. Pour éliminer le problème dû à la présence d'un étranglement permanent $\underline{d}$ en aval du distributeur, ce dernier peut être agencé comme représenté sur la figure 19 pour présenter, dans chaque circuit parallèle 18, 18', en aval des étranglements variables a, b ou a', b', un troisième étranglement variable c ou c' également actionné par l'élément primaire 2 du distributeur, la pression de réaction $P_r$ étant prélevée en amount de ce dernier. Les étranglements a, b, c et a', b', c' sont déterminés de façon que, dans un sens de rotation de l'élément primaire 2, les étranglements b et c' entrent les premiers en jeu, après quoi l'étranglement a entre en jeu (b' et c, puis a' dans l'autre sens d'actionnement).

## Revendications

1. Distributeur hydraulique rotatif, comprenant un élément rotatif primaire (2, 2') destiné à être relié à un dispositif d'actionnement, un élément rotatif secondaire (3, 3') coaxial à l'élément rotatif primaire et destiné à être relié à un mécanisme entraîné, un moyen de valve de distribution (11, 12) couplé à l'élément primaire et destiné à commander un moteur hydraulique (10) d'assistance du mécanisme entraîné en fonction d'un déplacement angulaire relatif limité entre les éléments primaire et secondaire, une partie (3') de l'élément sécondaire entourant au moins partiellement une partie (2') de l'élément primaire, au moins un dispositif élastique déformable (4) de configuration générale annulaire sensiblement fermée entourant au moins l'élément primaire au niveau de ladite partie (2') de ce dernier et présentant au moins une paire de surfaces de butée (5, 5') coopérant avec des premier (20, 20', 20'', 110) et second (30, 33, 34, 160, 151) éléments de liaison reliés respectivement aux éléments primaire et secondaire pour maintenir ceux-ci en position relative centrée de repos, caractérisé en ce que le dispositif élastique (4) est monté à coulissement étanche par ses faces latérales annulaires opposées (40) dans une cavité annulaire (32) formée dans une pièce (3', 15, 16, 150) unie en rotation à l'élément secondaire (3), concentriquement à ce dernier, et est conformé pour définir dans cette cavité (32) une chambre interne (6) et une chambre externe (7) séparées et de volume inversement variables, et en ce qu'il comprend des moyens (8) pour acheminer un fluide sous pression modulable ($P_r$) dans au moins une de ces chambres.

2. Distributeur selon la revendication 1, caractérisé en ce que le dispositif élastique (4) est constitué par une structure de ressort cylindrique en forme de C fermé dont les zones d'extrémité (41) se recouvrent angulairement avec interposition d'un joint coulissant (42).

3. Distributeur selon la revendication 1, caractérisé en ce que le dispositif élastique est constitué de deux parties sensiblement semi-circulaires et symétriques ($4_1$, $4_2$) imbriquées à recouvrement étanche par leurs zones d'extrémité adjacents et sollicitées élastiquement l'une vers l'autre pour former un anneau déformable par des ressorts (45) diamétralement opposés disposés entre la zone centrale de chaque partie ($4_1$, $4_2$) et la paroi périphérique adjacente de la cavité annulaire (32).

4. Distributeur selon la revendication 1, caractérisé en ce que le dispositif élastique (4) est constitué d'une structure élastique annulaire fermée présentant des bras internes (44) de configuration sensiblement semi-circulaire formant lesdites surfaces de butée (5).

5.Distributeur selon la revendication 1, caractérisé en ce que le dispositif élastique (4) est constitué par une structure de ressort cylindrique en forme de C dont les zones d'extrémité en vis-à-vis (41) coopèrent à coulissement étanche avec le premier élément de liaison (110, 11).

6. Distributeur selon l'une des revendications 1 à 5, caractérisé en ce que le premier élément de liaison comprend un organe faisant saillie radialement vers l'extérieur (20, 20', 110) solidaire de l'élément primaire (2) et reçu entre des surfaces d'appui en vis-à-vis formant ladite paire de surfaces de butée (5) du dispositif élastique (4).

7. Distributeur selon la revendication 6, caractérisé en ce que le second élément de liaison comprend au moins une protubérance (30) faisant saillie axialement dans la cavité (32) et solidaire de la pièce définissant cette cavité et reçue entre lesdites surfaces d'appui en vis-à-vis (5) du dispositif élastique (4).

8. Distributeur selon la revendication 6, caractérisé en ce que les surfaces de butée de ladite paire (5) sont formées par des pattes (43') des zones d'extrémité du dispositif élastique (4) s'étendant vers l'extérieur et reçues dans une ouverture (33) de ladite partie (3') de l'élément secondaire (3) entourant l'élément primaire pour former une deuxième paire de surfaces de butée en opposition (5').

9. Distributeur selon l'une des revendications 2 à 4, caractérisé en ce que le premier élément de liaison comprend un organe solidaire de l'élément primaire (2) et présentant périphériquement au moins une découpe intérieure (20''), les zones d'extrémité du dispositif élastique (4) comportant des pattes (43) s'étendant au moins radialement vers l'intérieur, reçues dans la découpe (20'') et formant des surfaces d'appui en opposition constituant ladite paire de butées (5) du dispositif élastique (4).

10. Distributeur selon la revendication 9, caractérisé en ce que les pattes (43') des zones d'extrémité du dispositif élastique (4) s'étendent dans une ouverture (34) de la partie (3') de l'élément secondaire (3) entourant l'élément primaire (2) et forment une seconde paire de surfaces de butée en opposition (5') du dispositif élastique (4).

11. Distributeur selon la revendication 5 et la revendication 6, comportant un moyen de valve du type en étoile avec un rotor en forme de disque (11) présentant des bras radiaux (110) couplé en rotation avec l'élément primaire (2) et reçu dans une cavité discoïde d'un stator (22) couplé en rotation à l'élément secondaire (3), caractérisé en ce que le premier élément de liaison est constitué par au moins un bras (110) du rotor (11).

12. Distributeur selon l'une des revendications 1 à 10, caractérisé en ce qu'il comprend deux dispositifs élastiques adjacents diamétralement inversés (4, 4').

13. Distributeur selon l'une des revendications précédentes, caractérisé en ce qu'il comprend des moyens contrôlables séparés (e, d, EV) pour moduler la pression ($P_r$) acheminée dans ladite chambre (6, 7).

14. Distributeur selon l'une des revendications précédentes, caractérisé en ce que le moyen de valve de distribution est agencé (a, b, c, d) pour sélectivement moduler la pression ($P_r$) acheminée dans ladite chambre (6, 7).

**Patentansprüche**

1. Hydraulischer Rotationsverteiler mit einem primären Drehkörper (2, 2'), der mit einer Betätigungsvorrichtung verbindbar ist, einem sekundären Drehkörper (3, 3'), der zu dem primären Drehkörper koaxial und mit einem anzutreibenden Mechanismus verbindbar ist, einer Verteilerventileinrichtung (11, 12), die mit dem primären Drehkörper verbunden ist und dazu dient, einen hydraulischen Hilfsmotor (10) für den anzutreibenden Mechanismus in Abhängigkeit von einer begrenzten relativen Winkelverstellung zwischen dem primären und sekundären Drehkörper zu steuern, wobei ein Abschnitt (3') des sekundären Drehkörpers mindestens teilweise einen Abschnitt (2') des primären Drehkörpers umgibt, mindestens eine verformbare elastische Vorrichtung (4) von ungefähr ringförmiger, im wesentlichen geschlossener Konfiguration mindestens den primären Drehkörper auf Höhe des besagten Abschnittes (2') des letzteren umgibt und mindestens ein Paar Anschlagflächen (5, 5') aufweist, die mit einem ersten (20, 20', 20'', 110) und einem zweiten (30, 33, 34, 160, 151) Verbindungselement zuammenwirkt, die an dem primären Drehkörper bzw. an dem sekundären Drehkörper befestigt sind, um diese in ihrer zentralen Ruhestellung zu halten, dadurch gekennzeichnet, dass die elastische Vorrichtung (4) mit ihren gegenüberliegenden seitlichen Ringflächen (40) abgedichtet gleitend in einem ringförmigen Hohlraum (32), der in einem mit dem sekundären Drehkörper (3) drehfest verbundenen und zu diesem konzentrischen Bauteil (3', 15, 16, 150) gebildet ist, gelagert und so ausgebildet ist, dass in diesem Hohlraum (32) eine innere Kammer (6) und eine äussere Kammer (7) gebildet werden, die getrennt sind und deren Volumen umgekehrt veränderlich ist, und dass er Zuführungsmittel (8) aufweist, durch die ein unter regelbarem Druck ($P_r$) stehendes Strömungsmittel in mindestens eine der Kammer einführbar ist.

2. Verteiler nach Anspruch 1, dadurch gekennzeichnet, dass die elastische Vorrichtung (4) von einem zylindrischen Federgebilde in Form eines geschlossenen C gebildet wird, deren Endbereiche (41) sich winkelmässig überlappen, wobei eine Gleitdichtung (42) dazwischen angeordnet ist.

3. Verteiler nach Anspruch 1, dadurch gekennzeichnet, dass die elastische Vorrichtung von zwei im wesentlichen halbkreisförmigen und symmetrischen Abschnitten ($4_1$, $4_2$) gebildet wird, die sich an ihren benachbarten Endbereichen abgedichtet übergreifen und elastisch in Richtung aufeinander zu vorgespannt sind, um einen verformbaren Ring zu bilden, und zwar durch diametral entgegengesetzte Federn (45), die zwischen dem zentralen Bereich jedes Abschnittes ($4_1$, $4_2$) und der angrenzenden Umfangswand des ringförmigen Hohlraums (32) angeordnet sind.

4. Verteiler nach Anspruch 1, dadurch gekennzeichnet, dass die elastische Vorrichtung (4) aus einem geschlosssenen, ringförmigen, elastischen Gebilde besteht, das innere Arme (44) von im wesentlichen halbkreisförmiger Konfiguration aufweist, die die besagten Anschlagflächen (56) bilden.

5. Verteiler nach Anspruch 1, dadurch gekennzeichnet, dass die elastische Vorrichtung (4) aus einem zylindrischen Federgebilde in Form eines C besteht, deren gegenüberliegende Endbereiche (41) abgedichtet gleitend mit dem ersten Verbindungselement (110, 111) zusammenwirken.

6. Verteiler nach einem der Ansprüche 1-5, dadurch gekennzeichnet, dass das erste Verbindungselement aus einem mit dem primären Drehkörper (2) einstückigen Bauteil (20, 20', 110) besteht, das radial nach aussen vorsteht und zwischen gegenüberliegenden Anlageflächen aufgenommen wird, die das besagte Paar Anschlagflächen (5) der alstischen Vorrichtung (4) bilden.

7. Verteiler nach Anspruch 6, dadurch gekennzeichnet, dass das zweite Verbindungselement mindestens einen Vorsprung (30) aufweist, der axial in den Hohlraum (32) vorsteht und mit dem diesen Hohlraum bildenden Bauteil einstückig ausgebildet ist und zwischen den besagten, einander gegenüberliegenden Anlageflächen (5) der elastischen Vorrichtung (4) aufgenommen wird.

8. Verteiler nach Anspruch 6, dadurch gekennzeichnet, dass die Anlageflächen des besagten Paares (5) von Ansätzen (43') der Endbereiche der elastischen Vorrichtung (4) gebildet werden, die sich nach aussen erstrecken und in einer Öffnung (33) des besagten Abschnittes (3') des den primären Drehkörper umgebenden sekundären Drehkörpers (3) aufgenommen wird, um ein zweites Paar entgegengerichteter Anlageflächen (5') zu bilden.

9. Verteiler nach einem der Ansprüche 2-4, dadurch gekennzeichnet, dass das erste Verbindungselement aus einem Bauteil besteht, das mit dem primären Drehkörper (2) einstückig ausgebildet ist und am Umfang mindestens eine innere Ausnehmung (20'') aufweist, wobei die Endbereiche der elastischen Vorrichtung (4) Ansätze (43) aufweisen, die sich radial nach innen erstrecken, von der Ausnehmung (20') aufgenommen werden und entgegengerichtete Anlageflächen bilden, die das besagte Paar Anschläge (5) des elastischen Vorrichtung (4) darstellen.

10. Verteiler nach Anspruch 9, dadurch gekennzeichnet, dass die Ansätze (43') der Endbereiche der elastischen Vorrichtung (4) sich in eine Öffnung (34) des den primären Drehkörper (2) umgebenden Abschnittes (3') des sekundären Drehkörpers (3) erstrecken und ein zweites Paar entgegengerichteter Anschlagflächen (5) der elastischen Vorrichtung (4) bilden.

11. Verteiler nach Anspruch 5 oder 6 mit einem sternförmigen Ventil sowie einem mit radialen Armen (110) versehenen Rotor in Form einer Scheibe (11), die mit dem primären Drehkörper (2) drehfest verbunden ist und in einem scheibenförmigen Hohlraum eines Stators (12) sitzt, der mit dem sekundären Drehkörper (3) drehfest verbunden ist, dadurch gekennzeichnet, dass das erste Verbindungselement von mindestens einem Arm (110) des Rotors (11) gebildet wird.

12. Verteiler nach einem der Ansprüche 1-10, dadurch gekennzeichnet, dass er zwei diametral umgekehrte, benachbarte elastische Vorrichtungen (4, 4') aufweist.

13. Verteiler nach einem der vorhergehenden Ansprüche, dadurch gekennzeichnet, dass er getrennte Steuermittel (e, d, EV) zur Regelung des der besagten Kammer (6, 7) zugeführten Drucks ($P_r$) aufweist.

14. Verteiler nach einem der vorhergehenden Ansprüche, dadurch gekennzeichnet, dass die Verteilerventileinrichtung so betätigbar (a, b, c, d) ist, dass der in die besagte Kammer (6, 7) eingegebene Druck ($P_r$) wahlweise veränderbar ist.

**Claims**

1. A hydraulic rotary distributor comprising a primary rotary member (2, 2') adapted to be connected to an actuating device, a secondary rotary member (3, 3') coaxial to the primary rotary member and adapted to be connected to a driven mechanism, a distribution valve means (11, 12) coupled to the primary member and adapted to control a hydraulic servomotor (10) for the driven mechanism in response to a limited relative angular displacement between the primary and secondary members, a portion (3') of the secondary member enclosing at least partially a portion (2') of the primary member, at least one deformable resilient device (4) of substantially closed, generally annular configuration enclosing at least the primary member at the area of said portion (2') of the latter and presenting at least one pair of abutment surfaces (5, 5') cooperating with the first (20, 20', 20'', 110) and second (30, 33, 34, 160, 151) connection elements fixed, respectively, to the primary and secondary members for maintaining these in a relative center rest position, characterized in that the resilient device (4) is slidingly and sealingly mounted by its oppositer annular lateral faces (40) in an annular cavity (32) formed in a member (3', 15, 16, 150) fixed to the secondary member (3) for rotation therewith and concentrically to the latter, and is shaped to define in said cavity (32) an internal chamber (6) and an external chamber (7) separated and of inversely variable volumes, and in that it comprises means (8) for feeding a fluid under modulated pressure ($P_r$) into at least one of said chambers.

2. Distributor according to claim 1, characterized in that the resilient device (4) is comprised of a cylindrical spring structure of closed C shape having end areas (41) angularly overlapping each other, with a slidingly seal (42) being interposed therebetween.

3. Distributor according to claim 1, characterized in that the resilient device is comprised of two substantially semicircular and symmetric portions ($4_1$, $4_2$) intercalated by their adjacent end areas in sealing interrelationship and resiliently biased towards each other for forming a deformable ring by diametrically opposite springs (45) disposed between the central area of each portion ($4_1$, $4_2$) and the adjacent peripheral wall of the annular cavity (32).

4. Distributor according to claim 1, characterised in that the resilient device (4) is comprised of a closed annular resilient structure having internal arms (44) of substantially semicircular configuration forming said abutment surfaces (5).

5. Distributor according to claim 1, characterised in that the resilient device (64) is comprised of a cylindrical spring structure of C shape having opposed end areas (41) slidingly and sealingly cooperating with the first connection element (110, 111).

6. Distributor according to any of claims 1 to 5, characterized in that the first connection element comprises a member (20, 20', 110) radially extending towards the outside, which member is fixedly connected to the primary member (2) and received between opposed engaging surfaces forming said pair of abutment surfaces (5) of the resilient device (4).

7. Distributor according to claim 6, characterized in that the second connection element comprises at least one projection (30) axially projecting into the cavity (32) and fixed to the member defining said cavity and received between the opposed engaging surfaces (5) of the resilient device (4).

8. Distributor according to claim 6, characterised in that the abutment surfaces os said pair (5) are formed by lugs (43') of end areas of the resilient device (4) extending towards the outside and received in an opening (33) of said portion (3') of the secondary member (3) enclosing the primary member for forming a second pair of opposed abutment surfaces (5').

9. Distributor according to any of claims 2 to 4, characterized in that the first connection element comprises a member fixed to the primary member (2) and having at its periphery at least one internal cutout (20''), the end areas of the resilient device (4) comprising lugs (43) extending at least redially towards the interior, received in the cutout (20'') and forming opposed engaging surfaces constituting said pair of abutment surfaces (5) of the resilient device (4).

10. Distributor according to claim 9, characterized in that the lugs (43') of the end areas of the resilient device (4) extend into an opening (34) of the portion (3') of the secondary member (3) enclosing the primary member (2) and forming a second pair of opposed abutment surfaces (5') of the resilient device (4).

11. Distributor according to claim 5 and claim 6 comprising a star-type valve means including a rotor (11) of disc-shape having radial arms (110), which rotor is fixed to the primary member (2) for rotation therewith and received in a disc-shaped cavity of a stator (2) non -rotatably fixed to the secondary member (3), characterized in that the primary connection element is comprised of at least one arm (110) of the rotor (11).

12. Distributor according to any of claims 1-10, characterized in that it comprises two diametrically inverse adjacent resilient devices (4, 4').

13. Distributor according to any of the preceding claims, characterized in that it comprises separate controlable means (e, d, EV) for modulating the pressure $(P_r)$ fed into said chamber (6, 7).

14. Distributor according to any of the preceding claims, characterized in that the distribution valve means is actuated (a, b, c, d) for selectively modulating the pressure $(P_r)$ fed into said chamber (6, 7).

FIG.1

FIG.2

0 123 619

FIG.3

FIG.4

FIG.5

11

**FIG.6**

**FIG.7**

FIG. 8

FIG. 9

FIG_10

FIG_11

FIG_12

FIG_13

0 123 619

_FIG.14_

_FIG.15_

_FIG.16_

21

FIG_17

FIG_18

FIG_19

FIG. 20